# EUROPÄISCHE PATENTSCHRIFT

(11) **EP 2 706 275 B1**
(45) Veröffentlichungstag und Bekanntmachung des Hinweises auf die Patenterteilung: **17.05.2017**
(21) Anmeldenummer: 13180051.8
(22) Anmeldetag: 12.08.2013
(51) Int. Cl.: F16L 13/10, F16L 13/14, F16L 41/00, F16B 4/00

(54) **Anschlusssystem**
Connection system
Système de raccordement

(30) Priorität: 07.09.2012 DE 102012108356
(43) Veröffentlichungstag der Anmeldung: 12.03.2014
(73) Patentinhaber: Herborner Pumpentechnik GmbH & Co KG, 35745 Herborn (DE)
(72) Erfinder: Runte, Lars, 35684 Dillenburg-Frohnhausen (DE); Korupp, Sascha, 35614 Werdorf (DE); Hees, Felix, 35390 Gießen (DE)
(74) Vertreter: Patentanwälte Olbricht Buchhold Keulertz

(56) Entgegenhaltungen:
- EP-A1- 0 657 602
- EP-A1- 1 413 768
- EP-A2- 1 510 698
- DE-A1-102005 018 881
- GB-A- 619 347
- GB-A- 2 477 550
- US-A- 3 828 418

## Beschreibung

Die Erfindung betrifft ein Anschlusssystem zum lösbaren Anschließen eines Bauelements an ein beschichtetes Bauteil.Ein solches Anschlusssystem nach dem Oberbegriff des Anspruchs 1 ist aus der US 3 828 418 A bekannt. Das Anschließen von Bauelementen an ein beschichtetes Bauteil ist häufig problematisch, da durch den Kontakt zwischen dem Bauelement und dem Bauteil die Beschichtung des Bauteils beschädigt werden kann. Häufig werden dabei Schraubanschlüsse eingesetzt, in denen beispielsweise eine Entwässerungsschraube oder ein Entlüftungshahn eingeschraubt werden können.

Beschichtete Gewinde sind zwar prinzipiell möglich, haben aber das Problem, dass die Beschichtung am Gewinde durch den Kontakt mit dem Gegengewinde des Bauelements sehr leicht beschädigt wird. Vor allem beim Austausch des Bauelements oder bei einem wiederholten ein- und ausschrauben, tritt häufig aufgrund der zwischen einer Gewindepaarung herrschenden Kräfte eine Beschädigung der Beschichtung auf. Dadurch kann es beispielsweise zu einem Festrosten des Bauelements im Bauteil kommen, was größere Reparaturen oder sogar einen vollständigen Austausch des Bauteils zur Folge hat.

Der Erfindung liegt nun die Aufgabe zugrunde, ein Anschlusssystem zum lösbaren Anschließen eines Bauelements an ein beschichtetes Bauteil anzugeben, das einen sicheren Sitz des Bauelements am Bauteil ermöglicht und eine Beschädigungsgefahr für die Beschichtung vermeidet. Dabei soll dieses System kostengünstig und mit geringem Aufwand realisierbar sein.

Diese Aufgabe wird durch ein Anschlusssystem mit den Merkmalen des Anspruchs 1 gelöst. Vorteilhafte Ausgestaltungen sind Gegenstand der Ansprüche 2 bis 10. Das Anschlusssystem umfasst also ein Kupplungselement, das einen Kopf mit einem unrunden Außenquerschnitt und einen Schaft aufweist, wobei der Kopf mittels Formschluss drehfest in einem Kopfbereich einer Anschlussöffnung des Bauteils und der Schaft kraftschlüssig oder stoffschlüssig in einem Dichtbereich der Anschlussöffnung aufnehmbar ist und der Kopf eine Innen-Geometrie zum Anschluss des Bauelements aufweist.

Das Anschlusssystem umfasst also ein zusätzliches Kupplungselement, das fest mit dem beschichteten Bauteil verbindbar ist und in seinem Kopf die Verbindungsgeometrie zum Anschließen des Bauelements aufweist. Der Kopf ist beispielsweise als Vieleck, insbesondere als Achteck oder Sechseck ausgebildet und in einem entsprechend geformten Kopfbereich des Bauteils formschlüssig aufnehmbar. Durch die formschlüssige Anordnung können auch hohe Drehmomente vom Kupplungselement auf das Bauteil übertragen werden, ohne dass die Gefahr einer Verletzung der Beschichtung besteht. Die Lagesicherung des Kupplungselements im Bauteil erfolgt dabei nicht nur über den Formschluss des Kopfes, sondern auch über die kraftschlüssige oder stoffschlüssige Aufnahme des Schaftes im Dichtbereich der Anschlussöffnung. Ein kraftschlüssiger Halt wird dabei beispielsweise durch eine Presspassung erreicht, während bei einer stoffschlüssigen Verbindung z.B. eine Verklebung erfolgt. Die kraftschlüssige Verbindung ist dabei möglicherweise mit geringerem Aufwand herstellbar, wobei die stoffschlüssige Verbindung den Vorteil einer geringeren Materialbelastung bei möglicherweise höherer Dichtigkeit hat. Das Kupplungselement ist in jedem Fall stationär im Bauteil befestigt. Durch das Kupplungselement gelangt das anzuschließende Bauelement gar nicht in direkten Kontakt mit dem beschichteten Bauteil, sondern nur mit dem Kupplungselement, sodass auch bei einem häufigeren Austauschen des Bauelements keine Beschädigung der Beschichtung des Bauteils zu befürchten ist. Dabei muss das Bauteil auch nicht mit einem Gewindeanschluss versehen werden, sondern nur eine Anschlussöffnung mit relativ großen, glattflächigen Bereichen. Im Dichtbereich weist die Anschlussöffnung beispielsweise einen runden Querschnitt auf, der mit geringem Aufwand sehr genau herstellbar ist.

Bevorzugterweise ist die Innen-Geometrie als Innengewinde ausgebildet. Damit kann ein Bauelement relativ einfach in den Kopf des Kupplungselements eingeschraubt werden. Die bei höheren Drehmomenten auf die Verschraubung wirkenden Kräfte werden durch die formschlüssige Verbindung vom Kupplungselement auf das Bauteil übertragen. Dabei können problemlos Drehmomente bis zu 120 Nm eingebracht werden, da die Kräfte nicht auf die Beschichtung des Bauteils wirken, sodass keine Spannungen entstehen, die die Beschichtung zerstören könnten.Das Kupplungselement weist eine axiale Durchgangsöffnung auf. Damit lassen sich vielfältige Bauelemente über das Anschlusssystem mit dem Bauteil verbinden, beispielsweise eine Schraube zur Entwässerung, ein Entlüftungshahn oder auch ein Messfühler. Das Kupplungselement weist ein korrosionsfestes Material, insbesondere ein Bronzematerial auf. Das Kupplungselement ist dann auch ohne eine zusätzliche Beschichtung ausreichend korrosionsbeständig, so dass ein Festrosten des Bauelements im Kupplungselement nicht zu befürchten ist. Das Bronzematerial weist eine relativ hohe Festigkeit auf und ist damit zur Herstellung eines nicht rostenden, metallischen Gewindes, das auch hohe Kräfte aufnehmen kann, gut geeignet. Durch die Verwendung eines korrosionsfesten Materials für das Kupplungselement kann das Anschlusssystem auch in fluid-leitenden Bauteilen wie beispielsweise Schwimmbadpumpen und ähnlichem, problemlos eingesetzt werden.

Vorzugsweise weist der Kopf einen größeren Außendurchmesser auf als der Schaft, wobei der Kopf und der Schaft insbesondere einstückig ausgebildet sind. Dadurch kann der Kopf mit ausreichend großen, radial nach außen gerichteten Flächen versehen sein, so dass große Drehmomente auf das Bauteil übertragen werden können. Der Schaft muss dagegen nur mittels Kraftschluss gehalten werden und kann dementsprechend schlanker sein und insbesondere einen runden Querschnitt aufweisen. Durch eine Stufe zwischen Schaft und Kopf wird dabei verhindert, dass das Kupplungselement vollständig in das beschichtete Bauteil hinein gedrückt wird. Damit wird eine Fehlbedienung ausgeschlossen. Dabei kann auch das Innengewinde besonders einfach durch einen radial nach innen ragenden Vorsprung, nämlich das Material des Schafts, axial begrenzt werden, sodass eine Einbautiefe eindeutig definiert ist.

Eine besonders einfache Ausgestaltung ergibt sich dadurch, dass der Schaft einen runden Querschnitt aufweist. Dadurch ist das Herstellen einer kraftschlüssigen Verbindung zwischen dem Schaft und dem Dichtbereich der Anschlussöffnung relativ einfach herstellbar. Dabei ergibt sich eine sehr große Kontaktfläche und damit eine hohe Dichtigkeit zwischen dem Schaft und dem Bauteil.

Das Anschlusssystem umfasst das Bauteil, wobei das Kupplungselement eine größere axiale Länge aufweist als die Anschlussöffnung, wobei die Anschlussöffnung in einem Strömungskanal des Bauteils mündet. Durch die größere axiale Länge des Kupplungselements können Toleranzen der Wanddicke des Bauteils, wie sie beispielsweise bei der Herstellung des Bauteils entstehen, ausgeglichen werden, wobei gleichzeitig dafür gesorgt wird, dass die Durchgangsöffnung in der den Strömungskanal begrenzenden Fläche des Bauteils mündet, sodass das gesamte die Anschlussöffnung umgebende Material des Bauteils durch das Kupplungselement vor Korrosion geschützt ist. Das Kupplungselement kann dann etwa bündig mit der den Strömungskanal begrenzenden Fläche des Bauteils abschließen, wobei es sich bei dem Bauteil z.B. um ein Pumpengehäuse, das beispielsweise aus Grauguss hergestellt ist, handeln kann.Der Schaft weist eine größere axiale Erstreckung auf als der Dichtbereich. In Axialrichtung wird das Kupplungselement also nur kraftschlüssig bzw. stoffschlüssig in der Anschlussöffnung gehalten und nicht durch Formschluss. Dadurch kann ein großer Toleranzausgleich erfolgen, wobei sichergestellt wird, dass die Anschlussöffnung bis zu einer einen Strömungskanal begrenzenden Fläche des Bauteils erreicht. An einer Außenseite kann der Kopf des Kupplungselements gegebenenfalls geringfügig über das Bauteil überstehen. Dadurch ist das Einbringen axialer Kräfte zum Einsetzen des Kupplungselements problemlos möglich, ohne das ein Werkzeug in Kontakt mit einer gegebenenfalls beschichteten Oberfläche des Bauteils gelangt.Das Bauteil weist eine korrosionsfeste Beschichtung auf, wobei sich die Beschichtung bis auf eine vom Kopf abgewandte Stirnseite des Schafts und insbesondere bis in die Durchgangsöffnung hinein erstreckt. Dies ist beispielsweise dadurch zu erreichen, dass die Beschichtung erst nach Einsetzen des Kupplungselements in die Anschlussöffnung des Bauteils aufgebracht wird. Die Beschichtung deckt dann auch einen Übergang zwischen dem Bauteil und dem Kupplungselement ab, wobei insbesondere dann, wenn sich die Beschichtung bis in die Durchgangsöffnung hinein erstreckt, eine relativ große Kontaktfläche zwischen dem Kupplungselement und der Beschichtung ergibt, sodass ein sicherer Halt der Beschichtung erfolgt. Ein Eindringen von korrosiven Medien, wie beispielsweise Schwimmbadwasser, zwischen dem Schaft und dem Dichtbereich des Bauteils wird dann zuverlässig verhindert. Damit ist das Bauteil sehr gut vor Korrosion geschützt.

Weitere Merkmale, Einzelheiten und Vorteile der Erfindung ergeben sich aus der folgenden Beschreibung von Ausführungsbeispielen anhand der Zeichnungen. Es zeigen:
Figur 1 ein Kupplungselement vor dem Einsetzen in ein Bauteil in räumlicher Darstellung und
Figur 2 das Bauteil mit eingesetzten Kupplungselement im Querschnitt.

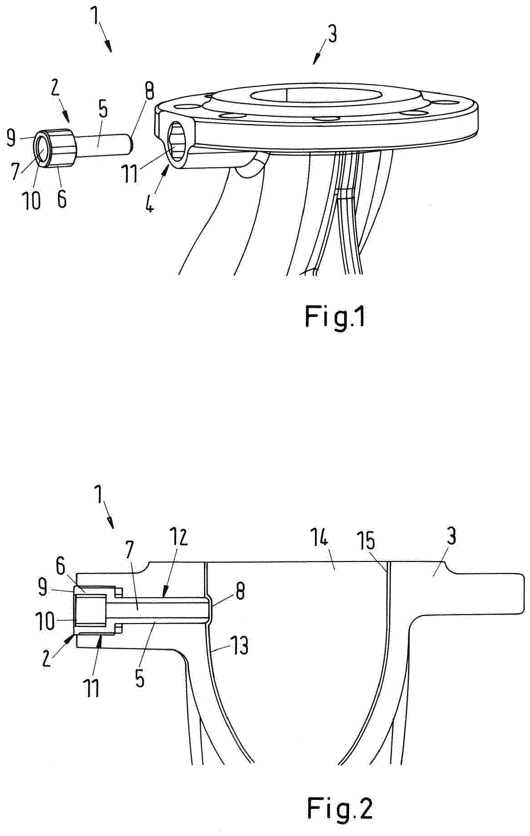

In Figur 1 ist ein Anschlusssystem 1 gezeigt, das ein Kupplungselement 2 und ein beschichtetes Bauteil 3 mit einer Anschlussöffnung 4 zur Aufnahme des Kupplungselements 2 umfasst. Das Kupplungselement 2 weist einen Schaft 5 und einen Kopf 6 auf, wobei der Schaft 5 einen runden und der Kopf 6 einen mehreckigen Außenquerschnitt aufweist. Das Kupplungselement 2 ist mit einer axialen Durchgangsöffnung 7 versehen, die sich axial durch das gesamte Kupplungselement 2 erstreckt, also von einer dem Kopf abgewandten Stirnseite 8 bis zur am Kopf 6 angeordneten Stirnseite 9. Der Schaft 5 ist also sozusagen rohrförmig ausgebildet. Das Kupplungselement 2 ist bei diesem Ausführungsbeispiel aus Bronze hergestellt, also aus einem korrosionsfesten Material, das eine ausreichende Steifigkeit und Festigkeit aufweist.

Im Kopf 6 des Kupplungselements 2 ist ein Innengewinde 10 eingebracht, das als Innengeometrie zum Anschluss eines Bauelementes dient. Der Schaft 5 ist bei diesem Ausführungsbeispiels innenseitig und außenseitig glattwandig ausgebildet.

Die Anschlussöffnung 4 im Bauteil 3 weist einen Kopfbereich 11 auf, dessen Form an die äußere Form des Kopfes 6 des Kupplungselements 2 angepasst ist. Der Kopfbereich 11 ist bei diesem Ausführungsbeispiel also mit einem sechskantförmigen Innenquerschnitt ausgebildet. Ebene Flächen des Kopfes 6 liegen dann im eingesetzten Zustand des Kupplungselements 2 in der Anschlussöffnung 4 an ebenen Flächen des Kopfbereiches 11 an, sodass relativ hohe Drehmomente vom Kupplungselement 2 auf das Bauteil 3 übertragbar sind.

In Figur 2 ist das Anschlusssystem 1 im montierten Zustand gezeigt. Das Kupplungselement 2 ist vollständig in die Anschlussöffnung 4 eingeführt worden. Dabei wird der Schaft 5 des Kupplungselements 2 kraftschlüssig in einem Dichtbereich 12 der Anschlussöffnung 4 gehalten und sichert das Kupplungselement 2 gegenüber dem Bauteil 3 im Wesentlichen in axialer Richtung. Der Schaft 5 kann dafür gegenüber der Anschlussöffnung 4 ein Übermaß aufweisen, so dass eine Presspassung erfolgt.

Der Kopf 6 ist formschlüssig im Kopfbereich 11 aufgenommen. Der Dichtbereich 12 weist eine kleinere axiale Erstreckung auf als der Schaft 5 und der Kopfbereich 11 eine größere axiale Erstreckung als der Kopf 6. Dadurch entsteht ein Luftspalt zwischen einer Stufe, die durch den Übergang vom Kopfbereich 11 zum Dichtbereich 12 ausgebildet ist und einer Stufe zwischen dem Schaft und dem Kopf 6. In axialer Richtung liegt also kein Formschluss vor, so dass relativ große Toleranzen, insbesondere im Hinblick auf die Materialstärke des Bauteils 3, die Einfluss auf die Länge der Anschlussöffnung 4 hat, ausgeglichen werden können.

Die Stirnseite 8, in der die Durchgangsöffnung 7 mündet, steht leicht über einer Innenfläche 13 des Bauteils 3 vor, die einen Strömungskanal 14 begrenzt. Strömungskanal bezeichnet dabei allgemein einen Raum, der zur Aufnahme eines Fluids, insbesondere einer Flüssigkeit, geeignet ist.

Die Innenfläche 13 des Bauteils 3 ist mit einer korrosionsfesten Beschichtung 15 versehen, so dass das Bauteil 3 beispielsweise als Graugussteil hergestellt sein kann und dennoch ausreichend vor Korrosion geschützt ist. Die Beschichtung 15 erstreckt sich dabei auch auf die Stirnseite 8 des Kupplungselements 2 und kann bis in die Durchgangsöffnung 7 hineinreichen. Ein Übergang zwischen dem Kupplungselement 2 und dem Bauteil 3 ist damit durch die Beschichtung abgedeckt und zuverlässig abgedichtet. Im Kupplungselement 2 ist keine Beschichtung erforderlich, da das Kupplungselement 2 vollständig aus einem korrosionsfesten Material ausgebildet ist.

Das erfindungsgemäße Anschlusssystem sieht ein Kupplungselement 2 vor, das stationär in einer Anschlussöffnung 4 eines Bauteils 3 aufgenommen wird, wobei das Kupplungselement 2 aus einem korrosionsfesten Material besteht und das Bauteil 3 mit einer korrosionsfesten Beschichtung versehen ist, die sich auch über einen Übergang zwischen dem Kupplungselement 2 und dem Bauteil 3 erstreckt. Das Kupplungselement 2 ist dabei mit seinem relativ schlanken Schaft 5 im Dichtbereich 12 der Anschlussöffnung 4 kraftschlüssig und/oder stoffschlüssig aufgenommen, sodass ein Medium aus dem Strömungskanal 14 nur durch die Durchgangsöffnung 7 gelangen kann und nicht zwischen dem Bauteil 3 und dem Kupplungselement 2 einzudringen vermag. Das Kupplungselement 2 schützt das Bauteil 3 also vor Korrosion. Mit besonderen Vorteil eignet sich die Erfindung daher für die Verwendung mit Pumpen bzw. Pumpengehäusen, die das Bauteil bilden.

Bauelemente, wie beispielsweise ein Entwässerungshahn oder eine Entlüftungsschraube oder auch Messinstrumente werden mit dem Kopf 6 des Kupplungselements 2 verbunden, beispielsweise in den Kopf 6 eingeschraubt. Dabei auftretende Drehmomente werden durch die formschlüssige Verbindung zwischen Kopf 6 und dem Kopfbereich 11 der Anschlussöffnung 4 auf das Bauteil 3 übertragen, wobei keine unzulässig hohen Spannungen in die Beschichtung 15 eingebracht werden. Eine Beschädigung einer Oberfläche des Kupplungselements 2 im Bereich der Innengeometrie führt, da das Kupplungselement 2 aus einem korrosionsfesten Material hergestellt ist, nicht dazu, dass Roststellen auftreten. Vielmehr ist eine leichte Beschädigung der Oberfläche ohne Folgen. Ein Lösen des Bauelements ist damit auch nach einem längeren Zeitraum problemlos möglich, wobei ein Festrosten nicht zu befürchten ist.

Neben dem Bauteil können natürlich auch die Bauelemente eine Beschichtung aufweisen.

Das erfindungsgemäße Anschlusssystem bietet eine sichere Lösung, um eine lösbare Verbindung eines Bauelements mit einem beschichteten Bauteil herzustellen, wobei insbesondere eine Verschraubung auch mit höheren Drehmomenten problemlos möglich ist, ohne eine Beschichtung zu beschädigen. Dafür ist ein Kupplungselement mittels einer Kombination aus form- und kraft- bzw. stoffschluss in einer Anschlussöffnung des Bauteils stationär aufgenommen und gehalten. Der Schaft des Kupplungselements sorgt dabei für die axiale Lagesicherung mittels kraft- bzw. stoffschluss und übernimmt die Aufgabe des Abdichtens, während die Übertragung von Drehmomenten durch den Formschluss zwischen Kopf und Kopfbereich erfolgt.

Eine Vielkant-Geometrie am Kopf verhindert dabei ein Mitdrehen auch bei großen Drehmomenten wobei gleichzeitig ein Verschrauben in einem stabilen, nicht rostenden metallischen Gewinde im Kopf des Kupplungselements möglich ist. Damit sind Verschraubungen an beschichteten Bauteilen, wie beispielsweise Pumpengehäusen, sicher zu realisieren, wobei auch Drehmomente bis max. 120 Nm ohne Risiko eingebracht werden können. Ein Ausfall der Beschichtung durch ein zu großes Drehmoment ist nicht zu befürchten.

Da das Kupplungselement aus einem nicht rostenden Werkstoff gefertigt wird, ist ein Verrosten auch über einen jahrelangen Zeitraum nicht zu befürchten.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1.: Anschlusssystem
- 2.: Kupplungselement
- 3.: Bauteil
- 4.: Anschlussöffnung
- 5.: Schaft
- 6.: Kopf
- 7.: Durchgangsöffnung
- 8.: Stirnseite
- 9.: Stirnseite
- 10.: Innengewinde
- 11.: Kopfbereich
- 12.: Dichtbereich
- 13.: Innenfläche
- 14.: Strömungskanal
- 15.: Beschichtung

## Patentansprüche

1. Anschlusssystem (1) zum lösbaren Anschließen eines Bauelements an ein Bauteil (3), wobei das Anschlusssystem (1) ein Kupplungselement (2) und ein Bauteil (3) mit einer Anschlussöffnung (4) zur Aufnahme des Kupplungselements (2) umfasst, wobei das Kupplungselement (2) einen Kopf (6) mit einem unrunden Außenquerschnitt und einen Schaft (5) aufweist, wobei der Kopf (6) mittels Formschluss drehfest in einem Kopfbereich (11) der Anschlussöffnung (4) des Bauteils (3) und der Schaft (5) kraftschlüssig und/oder stoffschlüssig in einem Dichtbereich (12) der Anschlussöffnung (4) aufnehmbar ist und der Kopf (6) eine Innengeometrie zum Anschluss des Bauelements aufweist, wobei das Kupplungselement (2) eine größere axiale Länge aufweist als die Anschlussöffnung (4), die in einen Strömungskanal (14) des Bauteils mündet, wobei der Schaft (5) eine größere axiale Erstreckung aufweist als der Dichtbereich (12) und wobei das Kupplungselement (2) eine axiale Durchgangsöffnung (7) aufweist, **dadurch gekennzeichnet, dass** das Kupplungselement (2) ein korrosionsfestes Material und das Bauteil (3) eine Beschichtung (15) aufweist, wobei sich die Beschichtung (15) bis auf eine vom Kopf (6) abgewandte Stirnseite des Schafts (5) erstreckt.

2. Anschlusssystem nach Anspruch 1, **dadurch gekennzeichnet, dass** die Innengeometrie als Innengewinde (10) ausgebildet ist.

3. Anschlusssystem nach einem der vorhergehenden Ansprüche, **dadurch gekennzeichnet, dass** der Kopf (6) einen größeren Außendurchmesser aufweist als der Schaft (5), wobei der Kopf (6) und der Schaft (5) insbesondere einstückig ausgebildet sind.

4. Anschlusssystem nach einem der vorhergehenden Ansprüche, **dadurch gekennzeichnet, dass** der Schaft (5) einen runden Querschnitt aufweist.

5. Anschlusssystem nach einem der vorhergehenden Ansprüche, **dadurch gekennzeichnet, dass** sich die Beschichtung (15) bis in die Durchgangsöffnung (7) hinein erstreckt.

6. Anschlusssystem nach einem der vorhergehenden Ansprüche, **dadurch gekennzeichnet, dass** die Beschichtung (15) nach Einsetzen des Kupplungselements (2) in die Anschlussöffnung (4) aufgebracht ist.

7. Anschlusssystem nach einem der vorhergehenden Ansprüche, **dadurch gekennzeichnet, dass** die Beschichtung (15) den Übergang zwischen dem Bauteil (3) und dem Kupplungselement (2) abdeckt.

8. Anschlusssystem nach einem der vorhergehenden Ansprüche, **dadurch gekennzeichnet, dass** das Bauteil (3) ein Pumpengehäuse ist.

9. Anschlusssystem nach Anspruch 8, **dadurch gekennzeichnet, dass** das Pumpengehäuse aus Grauguss hergestellt ist.

10. Anschlusssystem nach einem der vorhergehenden Ansprüche, **dadurch gekennzeichnet, dass** das korrosionsfeste Material ein Bronzematerial ist.

## Claims

1. Connection system (1) for detachably connecting a component element to a component part (3), wherein the connection system (1) comprises a coupling element (2) and a component part (3) with a connection opening (4) for receiving the coupling element (2), wherein the coupling element (2) has a head (6) with a non-round outer cross-section and has a shank (5), wherein the head (6) can be received by means of a frictional connection in rotationally fixed manner in a head region (11) of the connection opening (4) of the component part (3), and the shank (5) can be received in a force fitting and/or firmly bonded manner in a sealing region (12) of the connection opening (4), and the head (6) has an internal geometry for connecting the component element, wherein the coupling element (2) has a greater axial length than the connection opening (4) ending in a flow channel (14) of the component part, wherein the shaft (5) has a greater axial extension than the sealing region (12) and wherein the coupling element (2) has an axial passage opening (7), **characterized in that** the coupling element (2) comprises a corrosion-resistant material and the component part (3) has a coating (15), wherein the coating (15) extends up to a front side of the shank (5) facing away from the head (6).

2. Connection system according to claim 1, **characterized in that** the internal geometry is formed as an internal thread (10).

3. Connection system according to any of the preceding claims, **characterized in that** the head (6) has a greater outer diameter than the shank (5), wherein the head (6) and the shank (5) are in particular formed as a one piece component.

4. Connection system according to any of the preceding claims, **characterized in that** the shank (5) has a round cross-section.

5. Connection system according to any of the preceding claims, **characterized in that** the coating (15) extends up into the passage opening (7).

6. Connection system according to any of the preceding claims, **characterized in that** the coating (15) is applied to the connection opening (4) after insertion of the coupling element (2).

7. Connection system according to any of the preceding claims, **characterized in that** the coating (15) covers the junction between the component part (3) and the coupling element (2).

8. Connection system according to any of the preceding claims, **characterized in that** the component part (3) is a pump housing.

9. Connection system according to claim 8, **characterized in that** the pump housing is made of grey cast iron.

10. Connection system according to any of the preceding claims, **characterized in that** the corrosion-resistant material is a bronze material.

## Revendications

1. Système de raccordement (1) pour le raccordement amovible d'un élément à une pièce (3), dans lequel le système de raccordement (1) comprend un élément de couplage (2) et une pièce (3) avec un orifice de raccordement (4) destiné à recevoir l'élément de couplage (2), dans lequel l'élément de couplage (2) comporte une tête (6) avec une section transversale extérieure ovale et une tige (5), dans lequel la tête (6) peut être logée solidaire en rotation par concordance de forme dans une zone de tête (11) de l'orifice de raccordement (4) de la pièce (3) et la tige (5) peut être logée en force et/ou par liaison de matière dans une zone d'étanchéité (12) de l'orifice de raccordement (4) et la tête (6) présente une géométrie interne destinée au raccordement de l'élément, dans lequel l'élément de couplage (2) a une plus grande longueur axiale que l'orifice de raccordement (4) qui débouche dans un canal d'écoulement (14) de la pièce, dans lequel la tige (5) a une plus grande dimension axiale que la zone d'étanchéité (12) et dans lequel l'élément de couplage (2) a un orifice de passage axial (7), **caractérisé en ce que** l'élément de couplage (2) a un matériau résistant à la corrosion et la pièce (3) a un revêtement (15), lequel revêtement (15) s'étend jusqu'à un côté frontal, à l'opposé de la tête (6), de la tige (5).

2. Système de raccordement selon la revendication 1, **caractérisé en ce que** la géométrie interne est réalisée sous forme de filetage intérieur (10).

3. Système de raccordement selon l'une des revendications précédentes, **caractérisé en ce que** la tête (6) a un plus grand diamètre extérieur que la tige (5), la tête (6) et la tige (5) étant notamment conçues d'une seule pièce.

4. Système de raccordement selon l'une des revendications précédentes, **caractérisé en ce que** la tige (5) a une section transversale ronde.

5. Système de raccordement selon l'une des revendications précédentes, **caractérisé en ce que** le revêtement (15) s'étend jusque dans l'orifice de passage (7).

6. Système de raccordement selon l'une des revendications précédentes, **caractérisé en ce que** le revêtement (15) est appliqué dans l'orifice de raccordement (4) après la mise en place de l'élément de couplage (2).

7. Système de raccordement selon l'une des revendications précédentes, **caractérisé en ce que** le revêtement (15) couvre la transition entre la pièce (3) et l'élément de couplage (2).

8. Système de raccordement selon l'une des revendications précédentes, **caractérisé en ce que** la pièce (3) est un carter de pompe.

9. Système de raccordement selon la revendication 8, **caractérisé en ce que** le carter de pompe est moulé en fonte grise.

10. Système de raccordement selon l'une des revendications précédentes, **caractérisé en ce que** le matériau résistant à la corrosion est du bronze.
